(19) Europäisches Patentamt / European Patent Office / Office européen des brevets

(11) **EP 4 426 953 B1**

(12) **EUROPÄISCHE PATENTSCHRIFT**

(45) Veröffentlichungstag und Bekanntmachung des Hinweises auf die Patenterteilung:
**08.10.2025  Patentblatt 2025/41**

(21) Anmeldenummer: **22809416.5**

(22) Anmeldetag: **26.10.2022**

(51) Internationale Patentklassifikation (IPC):
*F15B 19/00* *(2006.01)*

(52) Gemeinsame Patentklassifikation (CPC):
**F04B 51/00; B29C 45/82; F04B 49/08; F04B 49/10; F15B 19/005;** B29C 2045/826; F04B 2201/0803; F04B 2205/09; F15B 2211/20515; F15B 2211/20538; F15B 2211/20546; F15B 2211/6306; F15B 2211/6309; F15B 2211/6313; F15B 2211/633;    (Forts.)

(86) Internationale Anmeldenummer:
**PCT/EP2022/079936**

(87) Internationale Veröffentlichungsnummer:
**WO 2023/078754 (11.05.2023 Gazette 2023/19)**

(54) **VERFAHREN ZUR ÜBERWACHUNG EINES HYDRAULIKSYSTEMS**

METHOD FOR MONITORING A HYDRAULIC SYSTEM

PROCÉDÉ DE SURVEILLANCE D'UN SYSTÈME HYDRAULIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **03.11.2021  DE 102021128543**

(43) Veröffentlichungstag der Anmeldung:
**11.09.2024  Patentblatt 2024/37**

(73) Patentinhaber: **KraussMaffei Technologies GmbH 85599 Parsdorf (DE)**

(72) Erfinder:
• **MOSER, Stefan
85399 Hallbergmoos (DE)**
• **GREGER-GÜRBÜZ, Sina
81371 München (DE)**
• **FRUTH, Sebastian
80538 München (DE)**

(74) Vertreter: **Wilhelm, Ludwig
KraussMaffei Group GmbH
Patentabteilung
Krauss-Maffei-Strasse 1
85599 Parsdorf (DE)**

(56) Entgegenhaltungen:
DE-A1- 102015 206 403    DE-T5- 112017 000 002
JP-A- 2020 076 223

(52) Gemeinsame Patentklassifikation (CPC): (Forts.)
F15B 2211/6333; F15B 2211/6336;
F15B 2211/7053; F15B 2211/7058;
F15B 2211/7135; F15B 2211/7142;
F15B 2211/8633; F15B 2211/864; F15B 2211/865;
F15B 2211/87

## EP 4 426 953 B1

**Beschreibung**

Die Erfindung betrifft ein Verfahren zur Überwachung eines Hydrauliksystems. Bevorzugtes Anwendungsgebiet sind hydraulisch angetriebene Spritzgießmaschinen. Grundsätzlich kann die Erfindung aber bei jedem beliebigen Hydrauliksystem verwendet werden.

Das Dokument DE 10 2019 117 820 A1 offenbart ein Verfahren zur Zustandsüberwachung einer Hydraulikpumpe eines Hydrauliksystems einer Formgebungsmaschine, insbesondere einer Spritzgießmaschine. Die Hydraulikpumpe ist mit einer Druckleitung verbunden und wird zur Bereitstellung eines Druckes in der Druckleitung mit einem Verdrängungsvolumen oder einer Drehzahl betrieben. Es ist vorgesehen, dass das Verdrängungsvolumen oder die Drehzahl der Hydraulikpumpe plötzlich geändert wird. Durch eine Analyse einer zeitlichen Reaktion des Druckes in der Hydraulikpumpe und/oder in der Druckleitung wird ein Zustand der Hydraulikpumpe bestimmt.

JP 2020 076223 offenbart ein anderes bekanntes Verfahren zur Überwachung eines aus mehreren hydraulischen Komponenten bestehenden Hydrauliksystems.

Ausgehend hiervon liegt der Erfindung die Aufgabe zugrunde, ein Verfahren zur Überwachung eines aus mehreren hydraulischen Komponenten bestehenden Hydrauliksystems anzugeben, bei dem ohne zusätzliche Sensorik bzw. mit ohnehin im Hydrauliksystem vorhandener Sensorik eine Überwachung des Zustands aller Komponenten, insbesondere aller Pumpen und Verbraucher erfolgen kann.

Die Lösung dieser Aufgabe erfolgt mit den Merkmalen von Anspruch 1. Vorteilhafte Ausgestaltungen und Weiterentwicklungen finden sich in den abhängigen Ansprüchen 2 bis 11.

Gemäß einem Kerngedanken geht die vorliegende Erfindung von folgender Überlegung aus. Ein Hydrauliksystem besteht aus mehreren hydraulischen Komponenten und umfasst in der Regel einen Tank als eine Quelle eines Hydraulikfluids, wenigstens eine von einem Motor antreibbare Hydraulikpumpe und einen oder mehrere hydraulische Verbraucher, welche von dem von der Hydraulikpumpe geförderten Hydraulikfluid durchströmt werden. Als weitere hydraulische Komponenten sind üblicherweise auch Ventile vorhanden. Die vorgenannten hydraulischen Komponenten sind mittels Leitungen zu einem Hydrauliksystem zusammengeschaltet. Für eine Überwachung des Zustands eines solchen Hydrauliksystems ist es notwendig, den Zustand jeder einzelnen hydraulischen Komponente, mindestens jedoch der Hydraulikpumpe zu bestimmen. In einem ersten Schritt wird die mindestens eine Hydraulikpumpe innerhalb eines Hydrauliksystems vermessen, da sich deren Leckage auf alle nachfolgenden hydraulischen Komponenten auswirkt. Demgemäß sieht das erfindungsgemäße Verfahren folgenden Schritt (a) vor: Ermittlung der Leckage der wenigstens einen Hydraulikpumpe in Abhängigkeit des Drucks in der Hydraulikpumpe über vorgebbare Werte des Drucks in der Hydraulikpumpe.

In einem nächsten Schritt (b) werden untereinander absperrbare Subsysteme betrachtet. Ein solches Subsystem wird von der wenigstens einen Hydraulikpumpe aus dem Schritt (a) und einem hydraulischen Verbraucher gebildet. Der Verbraucher kann eine translatorische oder eine rotatorische Bewegung ausführen und somit einen mit diesem Verbraucher in Wirkverbindung stehenden Aktuator translatorisch oder rotatorisch bewegen. Für die Erzeugung einer translatorischen Bewegung können verschiedene an sich bekannte Ausführungsformen eines Hydraulikzylinders in Betracht kommen. Für die Erzeugung einer rotatorischen Bewegung können verschiedene an sich bekannte Ausführungsformen eines Hydromotors in Betracht kommen. Je nachdem wie vollständig die Überwachung ausgebildet sein soll, können einzelne untereinander absperrbare Subsysteme oder alle untereinander absperrbaren Subsysteme betrachtet und untersucht werden.

In einem nächsten Schritt (c) erfolgt die Ermittlung der Leckage der Verbraucher der gemäß Schritt (b) betriebenen Subsysteme. Hierzu wird der Differenzwert gebildet zwischen der Leckage des Subsystems mit dem Verbraucher und der Leckage der wenigstens einen Hydraulikpumpe aus Schritt (a).

In einem nächsten Schritt (d) erfolgt die Ermittlung des Wirkungsgrads des Hydrauliksystems und zwar wie folgt: In einem Schritt (d1) wird der Wirkungsgrad der Hydraulikpumpe in den Subsystemen im aktuellen Betriebszustand ermittelt, das heißt bei dem im aktuellen Betrieb vorherrschenden Druck an der Hydraulikpumpe. Als Betriebszustand kann die Kombination aus einer Bewegung des Verbrauchers bei einem wirksamen Volumenstrom und dem im aktuellen Zustand vorherrschenden Druck an der Hydraulikpumpe verstanden werden. Der aktuell vorherrschende Druck an der Hydraulikpumpe ergibt sich als Ergebnis der Kraft, die der Verbraucher für die Erzeugung der Bewegung aufbringen muss. "Aktuell" bedeutet den Zeitpunkt, bei welchem der Schritt (d1) ausgeführt wird oder die kurze Zeitspanne, in welcher der Schritt (d1) ausgeführt wird. Hierzu wird der aus der Leckage aus Schritt (a) dieser Hydraulikpumpe berechnete tatsächlich von der Pumpe geförderte Volumenstrom ins Verhältnis zu dem im Subsystem vom Verbraucher angeforderten Volumenstrom gesetzt.

In einem Schritt (d2) wird der Wirkungsgrad des oder Verbraucher im aktuellen Betriebszustand ermittelt, indem die tatsächlich für die Kraftumsetzung (= Erzeugung der Bewegung der Verbraucher und der angeschlossenen Aktoren) an einem bestimmten Verbraucher im Betriebszustand wirksame Volumenstrom ins Verhältnis zu dem im Betriebszustand tatsächlich von der Pumpe geförderten und an diesen Verbraucher gelieferten Volumenstrom gesetzt wird. Der am Verbraucher im Betriebszustand wirksame Volumenstrom ergibt sich aus den Leckagen aus den Schritten (a) und (c) bzw.

unter Einbeziehung dieser Leckagen. Der tatsächlich von der Pumpe im Betriebszustand an diesen Verbraucher gelieferte Volumenstrom ergibt sich unter Berücksichtigung der Leckage der Pumpe aus Schritt (a).

Gemäß einer ersten Ausführungsform kann vorgesehen werden, dass der Schritt (a) zu vorgebbaren Zeiten TA wiederholt durchgeführt wird, vorzugsweise 1x pro Tag, besonders bevorzugt 1x pro Stunde. Mit der hier genannten Wiederholung des Schritts (a) ist sichergestellt, dass stets ein aktueller Verlauf der Leckage der Hydraulikpumpe bei den nachfolgenden Berechnungen zur Verfügung steht.

In Weiterbildung der Erfindung kann der Schritt (b) zu vorgebbaren Zeiten $T_B$ wiederholt werden, wobei bei einem Hydrauliksystem einer zyklisch arbeitenden Maschine, insbesondere einer Spritzgießmaschine, einer Presse oder einer Werkzeugmaschine der Schritt (b) in jedem n-ten Zyklus durchgeführt wird, wobei n vorzugsweise kleiner als 10 ist und besonders bevorzugt n=1 ist.

Bei einem Hydrauliksystem einer kontinuierlich arbeitenden Maschine, insbesondere bei einem Extruders, kann der Schritt (b) in vorgebbaren Zeitschritten ∆T, wiederholt werden, wobei ∆T vorzugsweise kleiner als 10 Minuten ist, insbesondere kleiner als 1 Minute.

Gemäß einer weiteren Ausführungsform der Erfindung können ein erstes Subsystem mit einem Hydraulikzylinder und ein zweites Subsystem mit einen Hydromotor vorgesehen sein, wobei die beiden Subsysteme sequentiell betrieben werden können.

In einer Weiterbildung der Erfindung können Stillstandphasen vorgesehen sein, in welchen das Hydrauliksystem nicht betrieben wird und die Verbraucher des Hydrauliksystems nicht betätigt werden, wobei der Schritt (a) in einer oder in mehreren solcher Stillstandphasen durchgeführt wird.

In der Praxis sind in einem Hydrauliksystem mehrere Ventile mit unterschiedlichen Funktionen vorhanden. Das können reine Absperrventile oder reine Schaltventile sein. Ebenso können auch andere Ventile wie zum Beispiel Proportionalventile vorhanden sein. In einem oder mehreren der Subsysteme können somit auch ein oder mehrere Ventile vorhanden sein. Gemäß einer Ausführungsform der Erfindung kann vorgesehen sein, dass der Anteil dieser Ventile bei der Bestimmung der Leckage des Verbrauchers eines Subsystems unberücksichtigt bleibt bzw. vernachlässigt wird.

Gemäß einer vorteilhaften Ausführungsform der Erfindung kann in einem Schritt (d3) eine Ermittlung des Wirkungsgrades von einem oder mehreren, vorzugsweise von allen, der überprüften Subsysteme in dem Hydraulik-System vorgenommen werden, indem der real wirksame Volumenstrom eines Subsystems ins Verhältnis zum angeforderten Volumenstrom in diesem Subsystem gesetzt wird.

Vorteilhafterweise kann auch eine Berechnung des durchschnittlichen Wirkungsgrads des gesamten Hydrauliksystems vorgenommen werden. Hierzu werden die Wirkungsgrade der Subsysteme mit den anteiligen Dauern der einzelnen Prozessphasen gewichtet werden, nämlich gemäß $\eta_{Gesamt} = \frac{\eta_1 \cdot t_1 + \eta_2 \cdot t_2 + \cdots + \eta_n \cdot t_n}{t_{Gesamt}}$ , wobei $\eta_i$ der Wirkungsgrad eines Subsystems ist und $t_i$ die Zeitdauer, in welcher das Subsystem betrieben wird. Das Vorstehende gilt insbesondere in Bezug auf ein Hydrauliksystem einer zyklisch arbeitenden Maschine wie insbesondere eine Spritzgießmaschine, eine Presse oder eine Werkzeugmaschine. Die Summe der einzelnen Prozessphasen entspricht hierbei einem Zyklus der Maschine, insbesondere einem Spritzgießzyklus.

Bei einer Spritzgießmaschine können Subsysteme betrachtet und überwacht werden, die zyklisch untereinander abgesperrt sind, weil dies dem Betrieb der Spritzgießmaschine entspricht. Es ergibt sich somit eine permanente Überwachung des Hydrauliksystems während des Betriebs der Spritzgießmaschine, wobei in jedem Spritzgießzyklus Messwerte (hier Leckagewerte und Wirkungsgradwerte) ermittelt werden können. Ferner kann wie oben genannt auch ein durchschnittlicher Wirkungsgrad des gesamten Hydrauliksystems ermittelt werden.

Der oder die Verbraucher können eine translatorische oder eine rotatorische Bewegung ausführen bzw. ein Verbraucher kann in der Weise ausgebildet sein, dass eine translatorische oder eine rotatorische Bewegung ausgeführt werden kann.

Erfindungsgemäß wird lediglich mit vorhandenen Daten der Verbraucher und mit gemessenen Ist-Werten der Verbraucher im Betriebszustand gerechnet. Die vorhandenen Daten können in entsprechenden Datenblättern der Verbraucher entnommen werden. Hierbei kann es sich unter anderem um folgende Daten handeln: Schluckvolumen des Hydromotors, Flächenverhältnis des Hydraulikzylinders, Schluckvolumen der Pumpe. Die Ist-Werte werden mit geeigneten Sensoren gemessen. Hierbei kann es sich unter anderem um folgende Größen handeln: Drehzahl der Pumpe, Schwenkwinkel der Pumpe, Drehzahl des Hydromotors, axiale Geschwindigkeit des Hydraulikzylinder.

Für das Verständnis der Erfindung und im Hinblick auf die Beschreibung von Ausführungsbeispielen können folgende Definitionen hilfreich sein.

"Leckage einer Pumpe" = dasjenige Volumen pro Zeiteinheit, welches von der Pumpe aus dem Tank angesaugt, aber nicht von der Pumpe an einen nachfolgenden Verbraucher weitergegeben wird. Es handelt sich um die Differenz zwischen dem angesaugten und dem abgegebenen Volumenstrom.

"Leckage eines Verbrauchers" = diejenige Menge an Hydrauliköl, welche von der Pumpe pro Zeiteinheit an den Verbraucher geliefert, aber beim Verbraucher nicht in Bewegung umgesetzt wird. Es handelt sich um die Differenz zwischen ankommendem Volumenstrom und in Bewegung umgesetzten Volumenstrom.

"Volumenstrom" = pro Zeiteinheit gefördertes Volumen, zum Beispiel in Liter pro Minute.

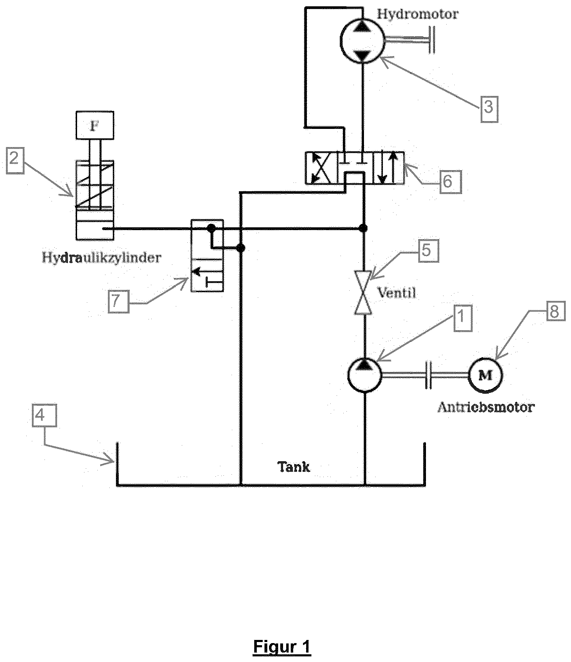

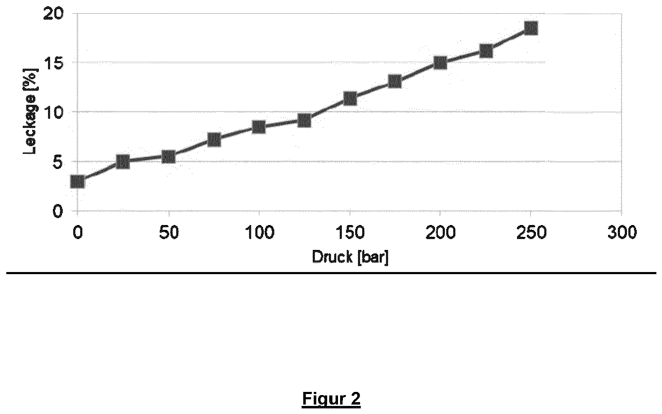

Nachfolgend soll die Erfindung anhand eines Ausführungsbeispiels und unter Bezugnahme auf die Figuren 1 und 2 näher beschrieben werden.

Es zeigen:

Figur 1    Blockschaltbild eines Hydrauliksystems
Figur 2    Leckage im jeweiligen Betriebspunkt der Hydraulikpumpe.

Die Figur 1 zeigt ein Blockschaltbild eines Hydrauliksystems mit einer Hydraulikpumpe 1 - nachfolgend manchmal auch nur kurz "Pumpe" genannt - und zwei hydraulischen Verbrauchern, nämlich einem Hydraulikzylinder 2 und einem Hydromotor 3. Die Versorgung des Hydrauliksystems mit einer Hydraulikflüssigkeit, insbesondere Hydraulíköl, erfolgt aus einem Tank 4. Das Hydrauliksystem umfasst des Weiteren ein Absperrventil 5, ein Proportionalventil 6 und ein Schaltventil 7. Ein Motor 8 dient für den Antrieb der Hydraulikpumpe 1. Ein erstes Subsystem wird gebildet von Hydraulikpumpe 1, Absperrventil 5, Schaltventil 7 und Hydraulikzylinder 2. Ein zweites Subsystem wird gebildet von Hydraulikpumpe 1, Absperrventil 5, Proportionalventil 6 und Hydromotor 3. Unter Vernachlässigung von Leckagen bei den Ventilen 5, 6 und 7 können auch folgende Subsysteme betrachtet werden, nämlich ein erstes Subsystem aus Hydraulikpumpe 1 und Hydraulikzylinder 2 sowie ein zweites Subsystem aus Hydraulikpumpe 1 und Hydromotor 3.

Schritt (a) Ermittlung der Leckage der Hydraulikpumpe

In einem ersten Schritt (a) wird die Leckage der Hydraulikpumpe im aktuellen Zustand über den Druck gemessen. Hierzu wird die Hydraulikpumpe 1 mittels des Absperrventils 5 von den nachfolgenden hydraulischen Komponenten abgekoppelt.

Ausgangspunkt für die Ermittlung der Leckage ist das Steuerungskonzept von Pumpen. Gemäß diesem Steuerungskonzept kann der Pumpe vorgegeben werden, wieviel Öl sie fördern soll, d.h. es kann ein Soll-Volumenstrom vorgegeben werden. Weil das Absperrventil 5 geschlossen ist, kann die vorgegebene Ölfördermenge bzw. der Soll-Volumenstrom nur als Lecköl aus der Hydraulikpumpe 1 abströmen. Dabei stellt sich ein bestimmter Druck in der Hydraulikpumpe 1 ein. Je mehr Sollvolumen angefordert wird bei abgesperrtem Ventil 5, umso höher wird der Druck sein, der sich einstellt. Das Lecköl fließt über eine Leckage-Ölleitung zurück in den Tank 4 und steht somit nicht auf der Ausgangsseite der Pumpe 1 zur Verfügung. Der geförderte Volumenstrom an Öl entspricht somit dem Volumenstrom an Lecköl. Es kann also festgestellt werden, bei welchem Druck p welcher Volumenstrom an Lecköl vorliegt. Der Soll-Volumenstrom wird kontinuierlich erhöht, bevorzugt in Rampenform. Dabei können auch vordefinierte Niveaus angefahren werden. Gleichzeitig werden kontinuierlich die sich ergebenden Druckwerte und die Öltemperaturwerte erfasst und aufgezeichnet. Der Vorgang wird vorzugsweise über den gesamten von der Pumpe erzeugbaren Druckbereich ausgeführt. Wenn der Soll-Volumenstrom in vielen kleinen Schritten erhöht wird und damit auch der sich einstellende Druck, liegt ein nahezu kontinuierlicher Verlauf des Volumenstroms an Lecköl über den Druckbereich der Pumpe vor. Der Vorgang wird vorzugsweise solange durchgeführt, bis der Druckgrenzwert $p_{max}$ der Hydraulikpumpe oder die obere Grenze des Arbeitsbereichs der Hydraulikpumpe erreicht ist.

Die Figur 2 zeigt das Ergebnis einer solchen vorgenannten Messung einer Hydraulikpumpe und zwar die prozentuale Leckage im jeweiligen druckabhängigen Betriebspunkt der Hydraulikpumpe. Somit ist die Leckage der Pumpe als Versorger für alle nachgelagerten Komponenten bekannt und als Referenz gegeben. Durch Verschleißmechanismen während ihrer Nutzungsdauer erhöht sich die Leckage der Pumpe im Laufe der Zeit. Die vorbeschriebene Messung wird in vorzugsweise definierten Intervallen für jede Hydraulik-Pumpe im System durchgeführt, um in einem geeigneten Datenbanksystem einen Trend über die Zeit dokumentieren und eine Prognose über den Verschleißverlauf über die zukünftige Nutzung ableiten zu können. Da nur Sollwerte und Messwerte verwendet werden, die heute schon in gängigen Hydrauliksystemen existieren, ist keine zusätzliche Sensorik notwendig. Im Ergebnis ergibt sich somit folgender Zusammenhang:

$$Q_{ist_{Pumpe}} = Q_{soll} - Q_{leck_{Pumpe}} \qquad\qquad (1)$$

Da sich die Leckage im Laufe der Zeit vergrößert, gilt der Schritt (a) des erfindungsgemäßen Verfahrens nur für den untersuchten Zeitpunkt. Daher wird der Schritt (a) von Zeit zu Zeit wiederholt, insbesondere in regelmäßigen Zeitabständen. Beispielsweise kann der Schritt (a) einmal pro Tag durchgeführt werden, insbesondere stets zum gleichen Zeitpunkt wiederholt.

In der Produktion mittels einer Spritzgießmaschine kann kontinuierlich (von Zyklus zu Zyklus) die Leckage der Subsysteme und daraus folgend die Leckage der Verbraucher ermittelt werden. Dies ist deshalb möglich, weil die Subsysteme sequentiell betrieben werden und damit "automatisch" eine Absperrung erfolgt. Gemessen werden $v_{ist}$ beim Zylinder als Verbraucher und $N_{ist}$ am Hydromotor als Verbraucher.

Für die Berechnung der Leckage in den Schritten (b), (c) und (d) wird immer die jüngste vorhandene Leckagekurve (entsprechend der Figur 2) der Hydraulikpumpe verwendet.

## Schritt (b) Ermittlung der Leckage der Subsysteme

In diesem Schritt wird die aktuelle Leckage der untereinander absperrbaren Subsysteme ermittelt. Wie oben beschrieben können ein erstes Subsystem aus Hydraulikpumpe 1 und Hydraulikzylinder 2 sowie ein zweites Subsystem aus Hydraulikpumpe 1 und Hydromotor 3 betrachtet werden. Für die Ermittlung der Leckage werden die Subsysteme untereinander abgesperrt und jedes Subsystem für sich betrieben und die Leckage im Betriebszustand ermittelt.

### (b1) Leckage des Subsystems aus einer Pumpe und einem Hydromotor

Im vorliegenden Ausführungsbeispiel wird die Leckage bei der Rotation des Hydromotors 3 ermittelt. Leckagen in Ventilen werden dabei vernachlässigt. Bei dem Betrieb eines Hydromotors 3 wird ein von der Hydraulikpumpe 1 kommender Volumenstrom in eine rotatorische Bewegung umgesetzt. Wird das dem Hydromotor 3 vorgelagerte Ventil 6 geschalten, so strömt Öl durch den Hydromotor 3 und treibt diesen an.

Der Volumenstrom $Q$ durch den Hydromotor 3 kann dabei direkt in eine Drehzahl $N$ umgerechnet werden. Dies erfolgt durch die Interpolation einer Kennlinie oder durch eine lineare Umrechnung aus dem Datenblatt der Pumpe. Bei der linearen Umrechnung ist auf dem Datenblatt der Pumpe ein Schluckvolumen $V$ und eine maximale Drehzahl $N_{max}$ gegeben. Der erforderliche Volumenstrom eines neuen Hydromotors $Q_{soll}$ kann für eine Drehzahl $N$ dadurch in $\frac{l}{min}$ also durch lineare Interpolation berechnet werden:

$$Q_{soll} = \frac{N_{soll} \cdot Q_{max}}{N_{max}} = \frac{N_{soll} \cdot V_{Schluck}}{1000} \qquad (2)$$

Ist eine Kennlinie mit mehreren Stützpunkten vorhanden, wird analog zwischen den Stützpunkten der Kennlinie interpoliert. Liegt Last an der Welle des Hydromotors an, resultiert aus dieser ein Drehmoment, das der Drehung des Hydromotors entgegenwirkt. In Folge stellt sich auf der Eingangsseite des Hydromotors ein Öldruck $p_{ist}$ ein. Dieser wird, wie die Drehzahl des Motors mit Hilfe eines geeigneten Messsystems erfasst. Im gesteuerten Betrieb wird üblicherweise für die Erreichung einen bestimmten Betriebszustandes eine Drehzahl $N_{soll}$ vorgegeben, die im Falle eines neuen Hydromotors direkt mit Hilfe von Formel (2) in den Volumenstrom $Q_{soll}$ dieses Hydromotors umgerechnet werden kann und der von der Hydraulikpumpe 1 angefordert wird.

Tritt in dem hier betrachteten Subsystem "Pumpe-Hydromotor" Verschleiß auf, der zu einer inneren Leckage in der Pumpe 1 und/oder dem Hydromotor 3 führt, kann die gewünschte Drehzahl $N_{soll}$ nicht erreicht werden. Die Pumpe 1 kann aufgrund ihrer Leckage $Q_{leckPumpe}$ den angeforderten Volumenstrom $Q_{soll}$ nicht liefern und/oder der Hydromotor 3 kann aufgrund seiner Leckage $Q_{leckMotor}$ unter der anliegenden Last den eingehenden Volumenstrom nicht mehr in eine ausreichende rotatorische Bewegung umsetzen. Die beiden Leckagen $Q_{leckPumpe}$ und $Q_{leckMotor}$ bilden zusammen die Gesamtleckage $Q_{leckGesamt}$ des Subsystems aus Pumpe 1 und Hydromotor 3.

Aufgrund der Leckagen von Pumpe und Hydromotor stellt sich anstelle der vorgegebenen Drehzahl $N_{soll}$ eine Drehzahl $N_{ist}$ ein, die sich aus dem tatsächlich wirksamen Volumenstrom $Q_{Motor}$ ergibt. Der tatsächlich am Hydromotor 3 wirksame Volumenstrom $Q_{Motor}$ errechnet sich aus dem Soll-Volumenstrom des Hydromotors 3 gemäß der obigen Gleichung (2) abzüglich der Leckagen an der Pumpe 1 und dem Hydromotor 3 wie folgt:

$$Q_{Motor} = Q_{soll} - Q_{leck\,Pumpe} - Q_{leck\,Motor} \qquad (3)$$

Die Leckage des Subsystems aus Pumpe und Hydromotor ergibt ausgehend von der Gleichung (3) zu:

$$Q_{leck\,Gesamt} = Q_{leck\,pumpe} + Q_{leck\,Motor} = Q_{soll} - Q_{Motor} \qquad (4)$$

Der Umsatz des Volumenstroms $Q_{Motor}$ in eine wirksame Umdrehung mit der Drehzahl $N_{ist}$ kann für den Hydromotor 3 analog zu der obigen Gleichung (2) beschrieben werden als:

$$N_{ist} = Q_{Motor} \cdot \frac{N_{max}}{Q_{max}} \qquad (5)$$

Aus diesen Zusammenhängen kann schlussendlich die Gesamtleckage des Subsystems "Pumpe-Hydromotor" ausgehend von Gleichung (4) und unter Verwendung von Gleichung (5) wie folgt ermittelt werden:

$$Q_{leck\,Gesamt} = Q_{soll} - \frac{N_{ist} \cdot Q_{max}}{N_{max}} \qquad (6)$$

Zu den vorstehenden Ausführungen soll nachfolgend ein konkretes Berechnungsbeispiel vorgestellt werden. Aus dem Datenblatt wird entnommen, dass der Hydromotor 3 ein konstantes geometrisches Verdrängungsvolumen und damit ein Schluckvolumen von $V_{Schluck} = 90 \frac{cm^3}{U}$ besitzt. Des Weiteren ist die maximale Drehzahl $N_{max} = 300 \frac{U}{min}$ angegeben. Daraus kann der maximale Volumenstrom $Q_{max}$ in $\frac{l}{min}$ analog zu Formel (2) berechnet werden:

$$Q_{max} = \frac{N_{max} \cdot V_{Schlu}}{1000} = \frac{300 \frac{U}{min} \cdot 90 \frac{cm^3}{U}}{1000} = 27 \frac{l}{min} \qquad (7)$$

Bei einer für den gewünschten Betriebszustand gewünschten Solldrehzahl von $N_{soll} = 100 \frac{U}{min}$ errechnet sich der von der Pumpe 1 angeforderte Sollvolumenstrom im Neuzustand des Hydromotors 3 nach Gleichung (2) wie folgt:

$$Q_{soll} = \frac{N_{soll} \cdot Q_{max}}{N_{max}} = \frac{100 \frac{U}{min} \cdot 27 \frac{l}{min}}{300 \frac{U}{min}} = 9 \frac{l}{min} \qquad (8)$$

Im Betriebszustand wird nun eine Abweichung von der Soll-Drehzahl zu der Ist-Drehzahl gemessen. Der Hydromotor 3 erreicht mit dem angeforderten Volumenstrom nur mehr eine Ist-Drehzahl $N_{ist} = 80 \frac{U}{min}$. Es liegt eine Gesamtleckage im Subsystem "Pumpe-Hydromotor" vor und daraus ergibt sich ein geringerer wirksamer Volumenstrom Q(wirksam) an dem Hydromotor 3:

$$Q_{Motor} = \frac{N_{ist} \cdot Q_{max}}{N_{max}} = \frac{80 \frac{U}{min} \cdot 27 \frac{l}{min}}{300 \frac{U}{min}} = 7{,}2 \frac{l}{min} \qquad (9)$$

Nach Formel (4) ergibt sich:

$$Q_{leck\,Gesamt} = Q_{soll} - Q_{Motor} = 1{,}8 \frac{l}{min} \qquad (10)$$

Am Ende von Schritt (b1) ist somit die Leckage des Subsystems aus Pumpe 1 und Hydromotor 3 für den Betriebszustand einer bestimmten gewünschten Soll-Drehzahl $N_{soll}$ bekannt.

**(b2) Leckage des Subsystems aus einer Pumpe und einem Hydraulikzylinder**

Die Berechnung erfolgt weitgehend analog zu den Berechnungen am Hydromotor. Es unterscheidet sich lediglich die Art der Bewegung, die erfasst wird. Anstelle der Drehzahl $N_{ist}$ wird die Geschwindigkeit $v_{ist}$ des Kolbens in dem Hydraulikzylinder 2 erfasst. Auch hier existiert ein Umrechnungsfaktor für die Ermittlung der Volumenströme Q, der in diesem Fall durch den Durchmesser des Zylinders und somit der für das Öl wirksamen Fläche des Kolbens beschrieben wird (z.B. 4000mm$^2$):

$$v = \frac{Q}{A_{Zylinder}} \tag{11}$$

Unter Last stellt sich bei dieser Bewegung ein Druck $p$ ein. Bei Vorliegen einer Leckage wird in diesem Fall bei einer gesteuerten Bewegung die gewünschte Geschwindigkeit $v_{soll}$ nicht erreicht, da die Errechnung des benötigten Soll-Volumenstroms $Q_{soll}$ analog zum Hydromotor mit statischen Umrechnungsfaktoren erfolgt, die eine Leckage nicht ausgleichen. Für eine beispielhaft angeforderte Geschwindigkeit $v_{soll}$ von $100\frac{mm}{s}$ ergibt sich $Q_{soll}$ zu

$$Q_{soll} = v_{soll} \cdot A_{Zylinder} = 100\frac{mm}{s} \cdot 4000mm^2 = 400000\frac{mm^3}{s} \tag{12}$$

Mit 1l = 10$^6$ mm$^3$ und 1min = 60s ergibt sich:

$$Q_{soll} = 24\frac{l}{min} \tag{13}$$

Wird z.B. nur eine Geschwindigkeit $v_{ist}$ von $90\frac{mm}{s}$ erreicht, kann die Differenz wiederum auf eine Leckage zurückgeführt werden. $v_{ist}$ ergibt sich also in Folge des wirksamen Volumenstroms $Q_{Zylinder}$. Analog zu obiger Formel (3) ergibt sich:

$$Q_{Zylinder} = Q_{soll} - Q_{leck_{Zylinder}} - Q_{leck_{Pumpe}} \tag{14}$$

Analog zu obiger Gleichung (4) gilt die Gesamtleckage des Subsystems "Pumpe-Hydraulikzylinder":

$$Q_{leck_{Gesamt}} = Q_{leck_{Pumpe}} + Q_{leck_{Zylinder}} = Q_{soll} - Q_{Zylinder} \tag{15}$$

Es gilt ebenfalls analog zu Formel (5):

$$v_{ist} = \frac{Q_{Zylinder}}{A_{Zylinder}} \tag{16}$$

Die Gesamtleckage des Subsystems dem Soll-Volumenstrom $Q_{soll}$ und dem wirksamen Volumenstrom $Q_{Zylinder}$ aus Gleichung (16) wie folgt:

$$Q_{leck_{Gesamt}} = Q_{soll} - v_{ist} \cdot A_{Zylinder}$$
$$= 400000\frac{mm^3}{s} - 90\frac{mm}{s} \cdot 4000mm^2 = 40000\frac{mm^3}{s} \tag{17}$$

Dies ergibt umgerechnet eine Leckage von $2.4\frac{l}{min}$.

Am Ende von Schritt (b2) ist somit die Leckage des Subsystems aus Pumpe 1 und Hydraulikzylinder 3 bekannt.

Für alle betrachteten Subsysteme ist dabei zu beachten, dass die Leckagemessung und -verrechnung nur für den jeweils gewünschten Betriebszustand ($N_{soll}$ bzw. $v_{soll}$) und den sich hierbei einstellenden Betriebsdruck gültig ist. Für einen anderen Betriebszustand und demzufolge für einen anderen Betriebsdruck muss die Leckage der Subsysteme neu bestimmt werden, denn die Leckage selbst ist abhängig vom herrschenden Betriebsdruck ist. Da in Schritt (a) allerdings eine Kennlinie für die Pumpe für mehrere Betriebsdrücke aufgenommen worden ist, ist dies zu jedem Zeitpunkt ohne weiteres möglich. Es wird lediglich mit vorhandenen Daten der Verbraucher und mit gemessenen Ist-Werten der Verbraucher im Betriebszustand gerechnet.

## Schritt (c) Ermittlung der Leckage der einzelnen Verbraucher

In diesem Schritt geht es um die Ermittlung der Leckage der Verbraucher der gemäß Schritt (b) betriebenen Subsysteme. Dies erfolgt durch Bildung des Differenzwertes zwischen der Leckage der Subsysteme aus Schritt (b) und der Leckage der wenigstens einen Hydraulikpumpe aus Schritt (a). In Schritt (b) wurden die Leckagen der beiden Subsysteme "Pumpe-Hydromotor" und "Pumpe-Hydraulikzylinder" bei einem gewünschten Betriebszustand einem dabei vorherrschenden Druck $p$ bestimmt. Die Leckage der Pumpe unter diesem Druck $p$ ist aus Schritt (a) bekannt. In Schritt (a) wurde diese Leckage für mehrere Druckwerte bzw. Stützpunkte erfasst. Entspricht $p$ nicht exakt einem der Druckwerte bzw. Stützpunkte, kann die zugehörige Leckage durch Interpolation der Stützpunkte bestimmt werden. Die Leckage des Verbrauchers des betrachteten Subsystems für den Systemdruck $p$ kann folglich berechnet werden:

$$Q_{Verbraucher} = Q_{Gesamt} - Q_{leck\,Pumpe} \qquad (18)$$

Das beschriebene Verfahren für die Ermittlung der Leckage von einzelnen Verbrauchern kann für jede der Pumpe nachgelagerte Achse und damit für jeden der Pumpe nachgelagerten Verbraucher angewendet werden, sofern eine Drehzahl (Verbraucher = Hydromotor) oder Position/Geschwindigkeit (Verbraucher = Hydraulikzylinder) gemessen werden kann und das zugehörige Schluckvolumen (Hydromotor) oder die wirksame Fläche der Kraftübertragung (Hydraulikzylinder) bekannt sind. Zudem muss der anliegende Öldruck p erfasst werden können.

### (c1) Leckage des Hydromotors

Der Hydromotor 3 fordert im Beispiel aus (b1) von der Hydraulikpumpe 1 einen Volumenstrom $Q_{soll} = 9\,\dfrac{l}{min}$ an, wobei sich ein Betriebsdruck von 200 bar an der Hydraulikpumpe 1 einstellt, um diesen Volumenstrom zu liefern. Zu diesem Druck wurde in Schritt (a) eine Leckage der Hydraulikpumpe 1 von 15 % gemessen (siehe Figur 2). Der Hydromotor erhält also nicht den geforderten Volumenstrom $Q_{soll}$ von $9\,\dfrac{l}{min}$ sondern nur einen wirksamen Volumenstrom $Q_{Motor}$ von $7{,}65\,\dfrac{l}{min}$, entsprechend einer Leckage von 15% von $9\,\dfrac{l}{min}$. Die Leckage des Hydromotors 3, welcher den Verbraucher in dem Subsystem aus Pumpe und Hydromotor darstellt, ergibt sich damit unter Berücksichtigung der Gesamtleckage dieses Subsystems aus der Gleichung (10) wie folgt:

$$Q_{leck\,Motor} = Q_{leck\,Gesamt} - Q_{leck\,pumpe} = 1{,}8\,\frac{l}{min} - 1{,}35\,\frac{l}{min}$$
$$= 0{,}45\,\frac{l}{min} \qquad (19)$$

### (c2) Leckage des Hydraulikzylinders

Der Hydraulikzylinder 2 fordert im Beispiel aus (b2) von der Hydraulikpumpe 1 einen Soll-Volumenstrom von $Q_{soll} = 24\,\dfrac{l}{min}$ an, wobei sich ein Betriebsdruck von 50 bar an der Hydraulikpumpe 1 einstellt, um diesen Volumenstrom zu liefern. Zu diesem Druck wurde in Schritt (a) eine Leckage der Hydraulikpumpe von 5,5 % gemessen (siehe Figur 2). Demzufolge ergibt sich eine Leckage für die Pumpe in Höhe von 5,5% von $Q_{soll}$, d.h. in Höhe von $1{,}32\,\dfrac{l}{min}$. Die Leckage des Hydraulikzylinders 2, welcher den Verbraucher in dem Subsystem aus Pumpe und Hydraulikzylinder darstellt, ergibt sich unter Berücksichtigung der Gesamtleckage für dieses Subsystem aus der Gleichung (17) damit wie folgt:

$$Q_{leck_{Zylinder}} = Q_{leck_{Gesamt}} - Q_{leck_{pumpe}} = 2{,}4\,\frac{l}{min} - 1{,}32\,\frac{l}{min}$$

$$= 1{,}08\,\frac{l}{min} \tag{20}$$

**Schritt (d) Ermittlung des Wirkungsgrads des Hydrauliksystems**

Der Wirkungsgrad resultiert aus dem Vergleich des Neu-Zustandes und mit dem Ist-Zustand der betreffenden hydraulischen Komponente. Vorliegend betrifft dieser Vergleich somit die Pumpe 1, den Hydraulikzylinder 2 und den Hydromotor 3. Dabei wird zunächst der Volumenstrom ermittelt, den der Verbraucher (Hydromotor 3, Hydraulikzylinder 1) im Neu-Zustand hätte. Hierfür können in den Datenblättern Maximalwerte oder Kennlinien enthalten sein, über die man zu einer zugehörigen Geschwindigkeit eines Verbrauchers den benötigten Volumenstrom an Öl errechnen kann. Bei einem Hydromotor entspricht die Geschwindigkeit der Drehzahl. Zum Beispiel könnte laut Datenblatt im Neuzustand des Hydromotors bei einer Umdrehung von $300\,\frac{1}{min}$ ein Volumenstrom von $40\,\frac{l}{min}$ erreicht werden. Denkbar ist aber auch, dass diese Daten bei der Inbetriebnahme einer Maschine ermittelt werden. Dort wird sie im Neuzustand kalibriert/abgeglichen. Dann wären nicht immer die Datenblätter notwendig. Zudem kann es auch im Neuzustand schon Abweichungen zu den Datenblättern geben. Bei einem Hydraulikzylinder geht es um die tatsächliche Geschwindigkeit, mit welcher der Kolben verfahren wird. Zum Beispiel könnte bei einer Fläche von 4000 $mm^2$ laut Datenblatt im Neuzustand des Hydraulikzylinders 2 nach Formel (19) eine Geschwindigkeit von $100\,\frac{mm}{s}$ bei einem Volumenstrom von $24\,\frac{l}{min}$ erreicht werden. Im Neu-Zustand entspricht der tatsächliche Volumenstrom $Q_{ist}$ dem Soll-Volumenstrom $Q_{soll}$. Im Ist-Zustand kommen die Leckagen in dem Hydrauliksystem zum Tragen. Diese Leckagen werden wie oben beschrieben ermittelt. Letztendlich entspricht der Ist-Volumenstrom $Q_{ist}$ an einer Komponente dem Soll-Volumenstrom $Q_{soll}$ dieser Komponente abzüglich des Leckage-Volumenstroms $Q_{leck}$. Nachfolgend sollen die Wirkungsgrade der hydraulischen Komponenten im Einzelnen ermittelt werden.

**(d1) Wirkungsgrad der Pumpe in den Subsystemen**

Hierfür wird für die einzelnen Subsysteme der aus der Leckage berechnete tatsächlich geförderte Volumenstrom $Q_{istPumpe}$ ins Verhältnis zum angeforderten Volumenstrom $Q_{soll}$ gesetzt. $Q_{soll}$ entspricht im Neu-Zustand dem tatsächlich geförderten Volumenstrom.

**(d1.1) Wirkungsgrad der Pumpe im Subsystem mit Hydromotor**

Der Hydromotor fordert im Beispiel aus (b1) von der Hydraulikpumpe $Q_{soll} = 9\,\frac{l}{min}$ an, wobei sich ein Betriebsdruck von 200 bar an der Hydraulikpumpe einstellt, um diese Menge zu liefern. Zu diesem Druck wurde in Schritt (a) eine Leckage der Hydraulikpumpe von 15 % gemessen (siehe Figur 2). Die Pumpe liefert also nicht die geforderte Menge von $9\,\frac{l}{min}$ sondern nur $7{,}65\,\frac{l}{min}$. Der Wirkungsgrad kann also für einen Druck von 200 bar berechnet werden:

$$\eta_{Pumpe,200bar} = \frac{Q_{ist,Pumpe}}{Q_{soll}} = \frac{7{,}65\,\frac{l}{min}}{9\,\frac{l}{min}} = 0{,}85 = 85\,\% \tag{21}$$

**(d1.2) Wirkungsgrad der Pumpe im Subsystem mit Hydraulikzylinder**

Im Beispiel aus (b2) fordert der Zylinder einen Soll-Volumenstrom von $Q_{soll} = 24\,\frac{l}{min}$ an und es stellt sich ein Druck von 50 bar ein. Bei diesem Betriebsdruck hat die Hydraulikpumpe eine Leckage von 5,5%, entsprechend 1,32 l/min. Somit ergibt sich ein wirksamer Volumenstrom von $Q_{istPumpe}$ von $22{,}68 \frac{l}{min}$. Der Wirkungsgrad der Pumpe für dieses Subsystem kann somit berechnet werden zu:

$$\eta_{Pumpe,50bar} = \frac{Q_{ist,Pumpe}}{Q_{soll}} = \frac{22{,}68 \frac{l}{min}}{24 \frac{l}{min}} = 0{,}95 = 95\,\% \tag{22}$$

**(d2) Ermittlung des Wirkungsgrads der Verbraucher im Betriebszustand**

Hierzu wird der tatsächlich für die Kraftumsetzung am Verbraucher wirksame Volumenstrom $Q_{Verbrauche}$ ins Verhältnis zum real von der Pumpe an diesen Verbraucher gelieferten Volumenstrom $Q_{istPumpe}$ gesetzt und zwar für die Werte entsprechend dem untersuchten Betriebszustand.

Hydromotor

Der Hydromotor erhält in dem Subsystem aus Pumpe und Hydromotor, wie in (c1) berechnet nicht die von die Pumpe angeforderte Menge von $9 \frac{l}{min}$ sondern nur $7{,}65 \frac{l}{min}$, da die Pumpe bereits eine Leckage aufweist. Zudem wurde aus dieser Erkenntnis bereits in (c1) berechnet, dass die Leckage des Hydromotors folglich $0{,}45 \frac{l}{min}$ ist (siehe Gleichung (18)). Ausgehend von den berechneten Leckagen von Pumpe 1 und Hydromotor 3 ist es nun möglich, einen Wirkungsgrad des Hydromotors wie folgt zu bestimmen.

$$\eta_{hydmot} = 1 - \frac{Q_{leck_{Motor}}}{Q_{soll} - Q_{leck_{Pumpe}}} = 1 - \frac{0{,}45 \frac{l}{min}}{9 \frac{l}{min} - 1.35 \frac{l}{min}} = 1 - 0{,}059 \tag{23}$$
$$= 94{,}1\%$$

Alternativ kann der Wirkungsgrad aus den Volumenströmen berechnet werden. Für die Bestimmung des am Hydromotor wirksamen Volumenstroms $Q_{Motor}$ gelten die obigen Gleichungen (5) und (9), d.h. im Beispiel ist $Q_{Motor} = 7{,}2$ l/min. Für die Bestimmung des ist Volumenstroms der Pumpe gilt die Gleichung (1), d.h. im Beispiel aus d(1.1) ist $Q_{ist_{Pumpe}} = 7{,}65 \frac{l}{min}$. Ausgehend hiervon errechnet sich der Wirkungsgrad des Hydromotors wie folgt:

$$\eta_{hydmot} = \frac{Q_{Motor}}{Q_{ist_{Pumpe}}} = 0.941 = 94{,}1\% \tag{24}$$

Hydraulikzylinder

Analog kann der Wirkungsgrad für den Hydraulikzylinder 2 in dessen Betriebszustand bestimmt werden:

$$\eta_{Zylinder} = 1 - \frac{Q_{leck_{Zylinder}}}{Q_{soll} - Q_{leck_{Pumpe}}} = 1 - \frac{1{,}08 \frac{l}{min}}{24 \frac{l}{min} - 1.32 \frac{l}{min}} \tag{25}$$
$$= 1 - 0{,}048 = 95{,}4\%$$

Alternativ kann der Wirkungsgrad aus den Volumenströmen berechnet werden. Für die Bestimmung des am Hydraulikzylinder wirksamen Volumenstroms $Q_{Zylinder}$ gilt obige Gleichung (16) und demzufolge ergibt sich in dem Beispiel ein Wert von $Q_{Zylinder} = 21{,}6 \frac{l}{min}$. Für die Bestimmung des wirksamen Volumenstroms der Pumpe gilt die Gleichung (1), d.h. im Beispiel aus d(2.2) ist $Q_{ist_{Pumpe}} = 22{,}68 \frac{l}{min}$. Ausgehend hiervon errechnet sich der Wirkungsgrad des Hydraulikzylinders wie folgt:

$$\eta_{Zylinder} = \frac{Q_{Zylinder}}{Q_{ist_{Pumpe}}} = 0.954 = 95{,}4\% \qquad (26)$$

### (d3) Ermittlung des Wirkungsgrads des jeweiligen Subsystems

Hierzu wird der an einem Verbraucher eines Subsystems real wirksame Volumenstrom in diesem Subsystem ins Verhältnis zu dem von diesem Verbraucher angeforderten Volumenstrom gesetzt wird. Der angeforderte Volumenstrom $Q_{soll}$ entspricht dem tatsächlichen Volumenstrom im Neu-Zustand.

Für das Subsystem mit Hydromotor:

$$\eta_{Gesamt_{Subsystem\ Motor}} = \frac{Q_{Motor}}{Q_{soll}} = \frac{7{,}2 \frac{l}{min}}{9 \frac{l}{min}} = 0{,}8 = 80\% \qquad (27)$$

Für das Subsystem Hydraulikzylinder:

$$\eta_{Gesamt_{Subsystem\ Zylinder}} = \frac{Q_{Zylinder}}{Q_{soll}} = \frac{21{,}6 \frac{l}{min}}{24 \frac{l}{min}} = 0{,}9 = 90\% \qquad (28)$$

### (e) Durchschnittlicher Wirkungsgrad des Gesamtsystems

In einer Weiterentwicklung der Erfindung kann vorgesehen werden, dass bei einer zyklisch arbeitenden Maschine, insbesondere bei einer Spritzgießmaschine der durchschnittliche Wirkungsgrad des gesamten Hydrauliksystems ermittelt wird. Hierbei wird berücksichtigt, wie lange ein Subsystem im Spritzgießzyklus betrieben wird. Daraus kann der durchschnittliche Wirkungsgrad des Gesamtsystems für den eingestellten Prozess berechnet werden. Wird im Beispielsystem der Hydromotor pro Zyklus 9 Sekunden und der Zylinder 1 Sekunde betrieben, ergibt sich der durchschnittliche Wirkungsgrad des Gesamtsystems wie folgt:

$$\eta_{Gesamt} = \frac{\eta_1 \cdot t_1 + \eta_2 \cdot t_2 + \cdots + \eta_n \cdot t_n}{t_{Gesamt}} = \frac{9s \cdot 80\% + 1s \cdot 90\%}{10s} = 81\% \qquad (29)$$

### Bezugszeichenliste

1 Hydraulikpumpe
2 Hydraulikzylinder
3 Hydromotor
4 Tank
5 Absperrventil
6 Proportionalventil
7 Schaltventil
8 Antriebsmotor

**Patentansprüche**

1. Verfahren zur Überwachung eines aus mehreren hydraulischen Komponenten bestehenden Hydrauliksystems, umfassend eine Quelle eines Hydraulikfluids, wenigstens eine Hydraulikpumpe und einen oder mehrere hydraulische Verbraucher, welche von dem von der Hydraulikpumpe geförderten Hydraulikfluid durchströmt werden, wobei das Verfahren folgende Schritte umfasst:

   (a) Ermittlung der Leckage der wenigstens einen Hydraulikpumpe in Abhängigkeit des Drucks in der Hydraulikpumpe über vorgebbare Werte des Drucks in der Hydraulikpumpe;
   (b) Betrieb von einem oder mehreren, vorzugsweise allen, untereinander absperrbaren hydraulischen Subsystemen des Hydrauliksystems und Ermittlung der aktuellen Leckage dieser Subsysteme im Betriebszustand, wobei ein Subsystem von der wenigstens einen Hydraulik-Pumpe aus Schritt (a) und einem Verbraucher gebildet wird,
   (c) Ermittlung der Leckage der Verbraucher der gemäß Schritt (b) betriebenen Subsysteme durch Bildung des Differenzwertes zwischen der Leckage der wenigstens einen Hydraulikpumpe aus Schritt (a) und der Leckage desjenigen Subsystems aus Schritt (b), welches den vorgenannten Verbraucher aufweist,
   (d) Ermittlung des Wirkungsgrads der Komponenten des Hydrauliksystems gemäß den Schritten:

      (d1) Ermittlung des Wirkungsgrads der Pumpe in den Subsystemen im Betriebszustand, indem der aus der Leckage aus Schritt (a) im Betriebszustand berechnete, tatsächlich von der Pumpe geförderte Volumenstrom $Q_{istPumpe}$ ins Verhältnis zu dem im Subsystem vom Verbraucher angeforderten Volumenstrom $Q_{soll}$ gesetzt wird,
      (d2) Ermittlung des Wirkungsgrads des oder der Verbraucher im Betriebszustand, indem der tatsächlich für die Kraftumsetzung an einem bestimmten Verbraucher im Betriebszustand wirksame Volumenstrom $Q_{Verbraucher}$ ins Verhältnis zu dem im Betriebszustand tatsächlich von der Pumpe geförderten und an diesen Verbraucher gelieferten Volumenstrom $Q_{ist}$ gesetzt wird, wobei der am Verbraucher im Betriebszustand wirksame Volumenstrom sich aus den Leckagen aus den Schritten (a) und (c) ergibt und sich der tatsächlich von der Pumpe im Betriebszustand an diesen Verbraucher gelieferte Volumenstrom unter Berücksichtigung der Leckage der Pumpe aus Schritt (a) ergibt.

2. Verfahren nach Anspruch 1,
   **dadurch gekennzeichnet, dass**
   der Schritt (a) zu vorgebbaren Zeiten $T_A$ wiederholt durchgeführt wird, vorzugsweise 1x pro Tag, besonders bevorzugt 1x pro Stunde.

3. Verfahren nach Anspruch 1 oder 2,
   **dadurch gekennzeichnet, dass**
   der Schritt (b) zu vorgebbaren Zeiten $T_B$ wiederholt wird, wobei bei einem Hydrauliksystem einer zyklisch arbeitenden Maschine, insbesondere einer Spritzgießmaschine, einer Presse oder einer Werkzeugmaschine der Schritt (b) in jedem n-ten Zyklus durchgeführt wird, wobei n vorzugsweise kleiner als 10 ist und besonders bevorzugt n=1 ist.

4. Verfahren nach Anspruch 1 oder 2,
   **dadurch gekennzeichnet, dass**
   wobei bei einem Hydrauliksystem einer kontinuierlich arbeitenden Maschine, insbesondere eines Extruders, der Schritt (b) in vorgebbaren Zeitschritten $\Delta T$, wiederholt wird, wobei $\Delta T$ vorzugsweise kleiner als 10 Minuten ist, insbesondere kleiner als 1 Minute.

5. Verfahren einem der vorstehenden Ansprüche,
   **dadurch gekennzeichnet, dass**
   ein erstes Subsystem mit einem Hydraulikzylinder und ein zweites Subsystem mit einen Hydromotor vorgesehen sind, und dass die beiden Subsysteme sequentiell betrieben werden.

6. Verfahren nach einem der vorstehenden Ansprüche,
   **dadurch gekennzeichnet, dass**
   Stillstandphasen vorgesehen sind, in welchen das Hydrauliksystem nicht betrieben wird und die Verbraucher des Hydrauliksystems nicht betätigt werden, und dass der Schritt (a) in einer oder in mehreren der Stillstandphasen durchgeführt wird.

**7.** Verfahren nach einem der vorsehenden Ansprüche,
**dadurch gekennzeichnet, dass**
in einem oder mehreren der Subsysteme ein oder mehrere Ventile vorhanden sind, und dass der Anteil dieser Ventile bei der Bestimmung der Leckage des Verbrauchers eines Subsystems unberücksichtigt bleibt bzw. vernachlässigt wird.

**8.** Verfahren nach einem der vorstehenden Ansprüche,
**dadurch gekennzeichnet, dass**
eine Ermittlung des Wirkungsgrades von einem oder mehreren, vorzugsweise von allen, der überprüften Subsysteme in dem Hydraulik-System vorgenommen wird, indem der real wirksame Volumenstrom eines Subsystems $Q_{Verbraucher}$ ins Verhältnis zum angeforderten Volumenstrom $Q_{soll}$ in diesem Subsystem gesetzt wird.

**9.** Verfahren nach Anspruch 8,
**dadurch gekennzeichnet, dass**
eine Berechnung des durchschnittlichen Wirkungsgrads des gesamten Hydrauliksystems vorgenommen wird, indem die Wirkungsgrade der Subsysteme mit den anteiligen Dauern der einzelnen Prozessphasen gewichtet werden,

nämlich gemäß $\eta_{Gesamt} = \dfrac{\eta_1 \cdot t_1 + \eta_2 \cdot t_2 + \cdots + \eta_n \cdot t_n}{t_{Gesamt}}$ , wobei $\eta$ der Wirkungsgrad eines Subsystems ist und t die Zeitdauer, in welcher das Subsystem betrieben wird.

**10.** Verfahren nach Anspruch 9,
**dadurch gekennzeichnet, dass**
es sich um ein Hydrauliksystem einer zyklisch arbeitenden Maschine handelt, insbesondere einer Spritzgießmaschine und dass die Summe der einzelnen Prozessphasen einem Zyklus entspricht.

**11.** Verfahren nach einem vorstehenden Ansprüche,
**dadurch gekennzeichnet, dass**
der oder die Verbraucher eine translatorische oder eine rotatorische Bewegung ausführen bzw. in der Weise ausgebildet sind, dass eine translatorische oder eine rotatorische Bewegung ausgeführt werden kann.

**Claims**

**1.** A method for monitoring a hydraulic system consisting of several hydraulic components, comprising a source of a hydraulic fluid, at least one hydraulic pump and one or more hydraulic consumers, which are flowed through by the hydraulic fluid which is conveyed by the hydraulic pump, wherein the method comprises the following steps:

(a) Determining the leakage of the at least one hydraulic pump as a function of the pressure in the hydraulic pump via predeterminable values of the pressure in the hydraulic pump;
(b) Operation of one or more, preferably all, hydraulic subsystems of the hydraulic system which can be shut off from one another, and determining of the present leakage of these subsystems in the operating state, wherein a subsystem is formed from the at least one hydraulic pump of step (a) and a consumer,
(c) Determining the leakage of the consumers of the subsystems operated according to step (b) by formation of the difference value between the leakage of the at least one hydraulic pump of step (a) and the leakage of the subsystem of step (b) which has the above-mentioned consumer,
(d) Determining the efficiency of the components of the hydraulic system according to the steps:

(d1) Determining the efficiency of the pump in the subsystems in the operating state, by the volume flow $Q_{actualPump}$ actually conveyed by the pump, calculated from the leakage of step (a) in the operating state, being set in relation to the volume flow $Q_{target}$ requested in the subsystem by the consumer,
(d2) Determining the efficiency of the consumer or consumers in the operating state, by the volume flow $Q_{consumer}$ actually effective for the force conversion at a particular consumer in the operating state being set in relation to the volume flow $Q_{actual}$ actually conveyed by the pump in the operating state and delivered to this consumer, wherein the volume flow effective at the consumer in the operating state results from the leakages from steps (a) and (c) and the volume flow actually delivered by the pump in the operating state to this consumer results taking into consideration the leakage of the pump from step (a).

2. The method according to Claim 1,
   **characterized in that**
   the step (a) is carried out repeatedly at predeterminable times $T_A$, preferably 1x per day, particularly preferably 1x per hour.

3. The method according to Claim 1 or 2,
   **characterized in that**
   the step (b) is repeated at predeterminable times $T_B$, wherein in the case of a hydraulic system of a cyclically operating machine, in particular an injection moulding machine, a press or a machine tool, the step (b) is carried out in every nth cycle, wherein n is preferably less than 10 and particularly preferably n=1.

4. The method according to Claim 1 or 2,
   **characterized in that**
   in the case of a hydraulic system of a continuously operating machine, in particular an extruder, the step (b) is repeated in predeterminable time steps $\Delta T$, wherein $\Delta T$ is preferably less than 10 minutes, in particular less than 1 minute.

5. The method according to one of the preceding claims,
   **characterized in that**
   a first subsystem is provided with a hydraulic cylinder and a second subsystem is provided with a hydraulic motor, and that the two subsystems are operated sequentially.

6. The method according to one of the preceding claims,
   **characterized in that**
   standstill phases are provided in which the hydraulic system is not operated and the consumers of the hydraulic system are not actuated, and that the step (a) is carried out in one or more standstill phases.

7. The method according to one of the preceding claims,
   **characterized in that**
   in one or more subsystems one or more valves are present, and that the proportion of these valves remains unconsidered or respectively is disregarded in the determining of the leakage of the consumer of a subsystem.

8. The method according to one of the preceding claims,
   **characterized in that**
   a determining of the efficiency of one or more, preferably all, of the examined subsystems is carried out in the hydraulic system, by the actually effective volume flow of a subsystem $Q_{consumer}$ being set in relation to the requested volume flow $Q_{target}$ in this subsystem.

9. The method according to Claim 8,
   **characterized in that**
   a calculation of the average efficiency of the total hydraulic system is carried out by the efficiencies of the subsystems being weighted with the proportional durations of the individual process phases, namely according to

$$\eta_{Total} = \frac{\eta_1 \cdot t_1 + \eta_2 \cdot t_2 + \cdots + \eta_n \cdot t_n}{t_{Total}}$$

wherein $\eta$ is the efficiency of a subsystem and $t$ is the duration in which the subsystem is operated.

10. The method according to Claim 9,
    **characterized in that**
    a hydraulic system of a cyclically operating machine is concerned, in particular an injection moulding machine, and that the sum of the individual process phases corresponds to a cycle.

11. The method according to one of the preceding claims,
    **characterized in that**
    the consumer or consumers carry out a translatory or a rotatory movement or respectively are configured such that a translatory or a rotatory movement can be carried out.

**Revendications**

1. Procédé de surveillance d'un système hydraulique composé de plusieurs composantes hydrauliques, comprenant une source d'un fluide hydraulique, au moins une pompe hydraulique ou plusieurs consommateurs hydrauliques, lesquels sont traversés par le fluide hydraulique transporté par la pompe hydraulique, dans lequel le procédé comprend les étapes suivantes :

   (a) détermination de la fuite de l'au moins une pompe hydraulique en fonction de la pression dans la pompe hydraulique par des valeurs pouvant être prédéfinies de la pression dans la pompe hydraulique ;
   (b) fonctionnement d'un ou plusieurs sous-systèmes hydrauliques du système hydraulique, de préférence tous, pouvant être coupés entre eux et détermination de la fuite actuelle de ces sous-systèmes dans l'état de fonctionnement, dans lequel un sous-système est formé par l'au moins une pompe hydraulique de l'étape (a) et un consommateur,
   (c) détermination de la fuite des consommateurs des sous-systèmes entraînés selon l'étape (b) par formation de la valeur différentielle entre la fuite de l'au moins une pompe hydraulique de l'étape (a) et la fuite de ce même sous-système de l'étape (b) qui présente ledit consommateur,
   (d) détermination du rendement des composantes du système hydraulique selon les étapes de :

      (d1) détermination du rendement de la pompe dans les sous-systèmes dans l'état de fonctionnement en ce que le débit volumique $Q_{istPumpe}$ calculé à partir de la fuite (a) à l'état de fonctionnement et effectivement transporté par la pompe est mis en rapport avec le débit volumique $Q_{soll}$ requis par le consommateur dans le sous-système,
      (d2) détermination du rendement du ou des consommateur(s) dans l'état de fonctionnement, en ce que le débit volumique $Q_{Verbrauche}$ effectivement efficace pour la transmission de force à un consommateur défini dans l'état de fonctionnement est mis en rapport avec le débit volumique $Q_{ist}$ transporté effectivement par la pompe dans l'état de fonctionnement et fourni à ce consommateur, dans lequel le débit volumique efficace au consommateur dans l'état de fonctionnement est déterminé par les fuites des étapes (a) et (c) et le débit volumique fourni effectivement à ce consommateur par la pompe dans l'état de fonctionnement est déterminé en tenant compte de la fuite de la pompe de l'étape (a).

2. Procédé selon la revendication 1, **caractérisé en ce que** l'étape (a) est exécutée de manière répétée à des temps pouvant être prédéfinis $T_A$, de préférence 1x par jour, particulièrement de préférence 1x par heure.

3. Procédé selon la revendication 1 ou 2, **caractérisé en ce que** l'étape (b) est répétée à des temps pouvant être prédéfinis $T_B$, dans lequel dans un système hydraulique d'une machine fonctionnant par cycles, en particulier d'une machine de moulage par injection, d'une presse ou d'une machine-outil, l'étape (b) est exécutée dans chaque $n^{ème}$ cycle, dans lequel n est de préférence inférieur à 10 et particulièrement de préférence n=1.

4. Procédé selon la revendication 1 ou 2, **caractérisé en ce que** dans un système hydraulique d'une machine fonctionnant en continu, en particulier d'une extrudeuse, l'étape (b) est répétée à des intervalles $\Delta T$ pouvant être prédéfinis, dans lequel $\Delta T$ est de préférence inférieur à 10 minutes, en particulier inférieur à une 1 minute.

5. Procédé selon l'une des revendications précédentes, **caractérisé en ce qu'**un premier sous-système avec un vérin hydraulique et un second sous-système avec un moteur hydraulique sont prévus, et que les deux sous-systèmes sont entraînés de manière séquentielle.

6. Procédé selon l'une des revendications précédentes, **caractérisé en ce que** des phases d'arrêt sont prévues, dans lesquelles le système hydraulique n'est pas entraîné et les consommateurs du système hydraulique ne sont pas actionnés, et que l'étape (a) est exécutée dans une ou plusieurs des phases d'arrêt.

7. Procédé selon l'une des revendications précédentes, **caractérisé en ce qu'**un ou plusieurs clapets sont présents dans un ou plusieurs des sous-systèmes et que la part de ces clapets n'est pas prise en compte, respectivement est négligée dans la détermination de la fuite du consommateur d'un sous-système.

8. Procédé selon l'une des revendications précédentes, **caractérisé en ce qu'**une détermination du rendement d'un ou plusieurs, de préférence tous, des sous-systèmes contrôlés dans le système hydraulique est effectuée, **en ce que** le débit volumique réellement efficace d'un sous-système $Q_{Verbraucher}$ est mis en rapport avec le débit volumique requis $Q_{soll}$ dans ce sous-système.

**EP 4 426 953 B1**

9. Procédé selon la revendication 8, **caractérisé en ce qu'**un calcul du rendement moyen de la totalité du système hydraulique est effectué, **en ce que** les rendements des sous-systèmes sont pondérés avec les durées proportionnelles des différentes phases du procédé, à savoir selon

$$\eta_{Gesamt} = \frac{\eta_1 \cdot t_1 + \eta_2 \cdot t_2 + \cdots + \eta_n \cdot t_n}{t_{Gesamt}}$$

dans lequel $\eta$ est le rendement d'un sous-système et t la durée pendant laquelle le sous-système est entraîné.

10. Procédé selon la revendication 9, **caractérisé en ce qu'**il s'agit d'un système hydraulique d'une machine fonctionnant par cycles, en particulier d'une machine de moulage par injection et que la somme des différentes phases de procédé correspond à un cycle.

11. Procédé selon l'une des revendications précédentes, **caractérisé en ce que** le(s) consommateur(s) exécute(nt) un mouvement de translation ou de rotation, respectivement sont conçus de façon à ce qu'un mouvement de translation ou de rotation puisse être effectué.

Hydromotor

Hydraulikzylinder

Ventil

Antriebsmotor

Tank

**Figur 1**

**Figur 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019117820 A1
- JP 2020076223 A